Europäisches Patentamt

European Patent Office

Office européen des brevets

(11) Veröffentlichungsnummer: **0 163 027**

**A1**

# (12) EUROPÄISCHE PATENTANMELDUNG

(21) Anmeldenummer: 85103057.7

(51) Int. Cl.⁴: **A 01 F 25/20**

(22) Anmeldetag: 16.03.85

(30) Priorität: 28.05.84 DE 3419862

(43) Veröffentlichungstag der Anmeldung:
04.12.85 Patentblatt 85/49

(84) Benannte Vertragsstaaten:
AT BE CH FR GB IT LI LU NL SE

(71) Anmelder: von der Heide, Hans
Ibbenbürener Strasse 17
D-4533 Laggenbeck(DE)

(72) Erfinder: von der Heide, Hans
Ibbenbürener Strasse 17
D-4533 Laggenbeck(DE)

(74) Vertreter: Patentanwälte Schulze Horn und Hoffmeister
Goldstrasse 36
D-4400 Münster(DE)

(54) Gerät zur Aufnahme insbesondere von Silagegut.

(57) Gerät zur Aufnahme insbesondere von Silagegut, mit einem nach oben offenen Aufnahmebehälter, der an einem Fahrzeug anbringbar und aus einer Ladestellung in eine weitere Arbeitsstellung verschwenkbar ist, bei dem zumindest die vordere Ladekante (2) der Öffnungsränder des Aufnahmebehälters (1) eine Schneid- oder Sägevorrichtung (4) mit einem oder mehreren Schneidblättern aufweist, die parallel zur Ladekante (2) verlaufen und mit ihrer Schneidseite vor der Ladekante (2) liegen. In einer Ausführungsform des Gerätes weist die Schneidvorrichtung (4) zwei nahezu über die Breite der Ladekante sich erstreckende Schneidblätter (3) und einen Schwingantrieb (6) auf, über den den Blätter (3) in Ladekantenrichtung oszillierend und gegensinnig bewegbar sind.

./...

FIG 1.

<u>Gerät zur Aufnahme insbesondere von Silagegut</u>

Die Erfindung betrifft ein Gerät zur Aufnahme insbesondere von Silagegut, mit einem nach oben offenen Aufnahmebehälter, der an einem Fahrzeug anbringbar und aus einer Ladestellung in eine weitere Arbeitsstellung verschwenkbar ist.

Mit derartigen Aufnahmegeräten, die in vielfachen Ausführungsformen bekannt sind, kann aus einem Silostock abgefrästes oder herausgeschnittenes Silagegut aufgenommen und gegebenenfalls auch zerkleinert und durchmischt werden. Die Aufnahmegeräte werden üblicherweise an einer Verschwenkeinrichtung am Heck eines Schleppers angebracht und ermöglichen es, im heruntergeschwenkten Zustand durch Rückwärtsfahren des Schleppers Futter aus einem Silo aufzunehmen.

Bei einem zähen und harten Silagegut wie Corn-Cob-Mix kann der Behälter aber nicht direkt in das Silagegut eingefahren werden, sondern nimmt nur bereits durch eine aufwendige Fräs- oder Schneidvorrichtung aus dem Silostock abgearbeitetes Silagegut auf.

Der Erfindung liegt die Aufgabe zugrunde, ein Aufnahmegerät anzugeben, bei dem der Behälter auch bei einem harten Silagegut wie Corn-Cob-Mix direkt in den Silostock eingefahren werden kann. Dies soll zudem möglich sein, ohne daß aufwendige bauliche Maßnahmen an dem Aufnahmegerät erforderlich sind.

Diese Aufgabe wird erfindungsgemäß bei einem Aufnahmegerät dadurch gelöst, daß zumindest die vordere Ladekante der Öffnungsränder des Aufnahmebehälters eine Schneid oder Sägevorrichtung mit einem oder mehreren Schneidblättern aufweist,
und daß die parallel zur Ladekante verlaufenden Schneid-

blätter mit ihrer Schneidseite vor der Ladekante liegen.

Bei dem erfindungsgemäßen Aufnahmegerät erleichtern die Schneidblätter der Schneidvorrichtung das Einfahren des Behälters in das Silagegut, indem sie in das Silagegut entlang des Einfahrweges einschneiden und es dadurch auflockern. Durch Heben des Behälters kann anschließend das abgetrennte Material aus dem Silostock entnommen werden. Mit der erfindungsgemäßen Schneidvorrichtung können einfache Aufnahmebehälter ausgestattet sein, die nur das abgetrennte Silagegut aufnehmen, aber auch Geräte, in denen das Silagegut zerkleinert, durch ein Mischwerk gemischt und gegebenenfalls auch seitlich aus dem Aufnahmebehälter ausgetragen werden kann. Bei derartigen Geräten ist vorgesehen, daß in dem Behälter ein um eine waagerechte Welle rotierendes Mischwerk angeordnet ist.

Wenn das Silagegut nicht allzu hart ist, reicht es normalerweise aus, wenn die vordere Ladekante des Aufnahmebehälters Schneidblätter aufweist. Bei einer vorteilhaften Ausführungsform des Aufnahmegerätes ist vorgesehen, daß die Schneidvorrichtung in zwei nahezu über die Breite der Ladekante sich erstreckende Schneidblätter und einen Schwingantrieb aufweist, über den die Blätter in Ladekantenrichtung oszillierend und gegensinnig bewegbar sind. In einer anderen Ausführungsform kann die Schneidvorrichtung aber auch parallele, aneinander anliegende und gegensinnig arbeitende Schneidblätter aufweisen.

Um das Abtrennen und Aufnehmen des Silagegutes aus dem Silostock zu erleichtern, kann weiterhin vorgesehen sein, daß zusätzlich zu der Ladekante auch die seitlichen Öffnungsränder des Behälters Schneidblätter aufweisen. In diesem Fall bietet es sich an, ein endloses Schneidband zu verwenden, das entlang der Ladekante und

3                    0163027

den Seitenrändern des Behälters verläuft.

Vorteilhaft ordnet man die Schneidblätter oder das
Schneidband in einer zu den Kanten hin offenen Tasche
der Behälterwandung an, in der sie vor Beschädigungen
weitgehend geschützt sind.

Ein Ausführungsbeispiel der Erfindung ist in der Zeichnung dargestellt und wird im folgenden näher beschrieben. Es zeigen:

Figur 1 eine Seitenansicht eines an einem Fahrzeug angebrachten erfindungsgemäßen Aufnahmegerätes in
        seiner Ladestellung,

Figur 2 das Aufnahmegerät der Figur 1 in seiner Mischstellung,

Figur 3 einen Schnitt durch den Aufnahmebehälter des
        Gerätes.

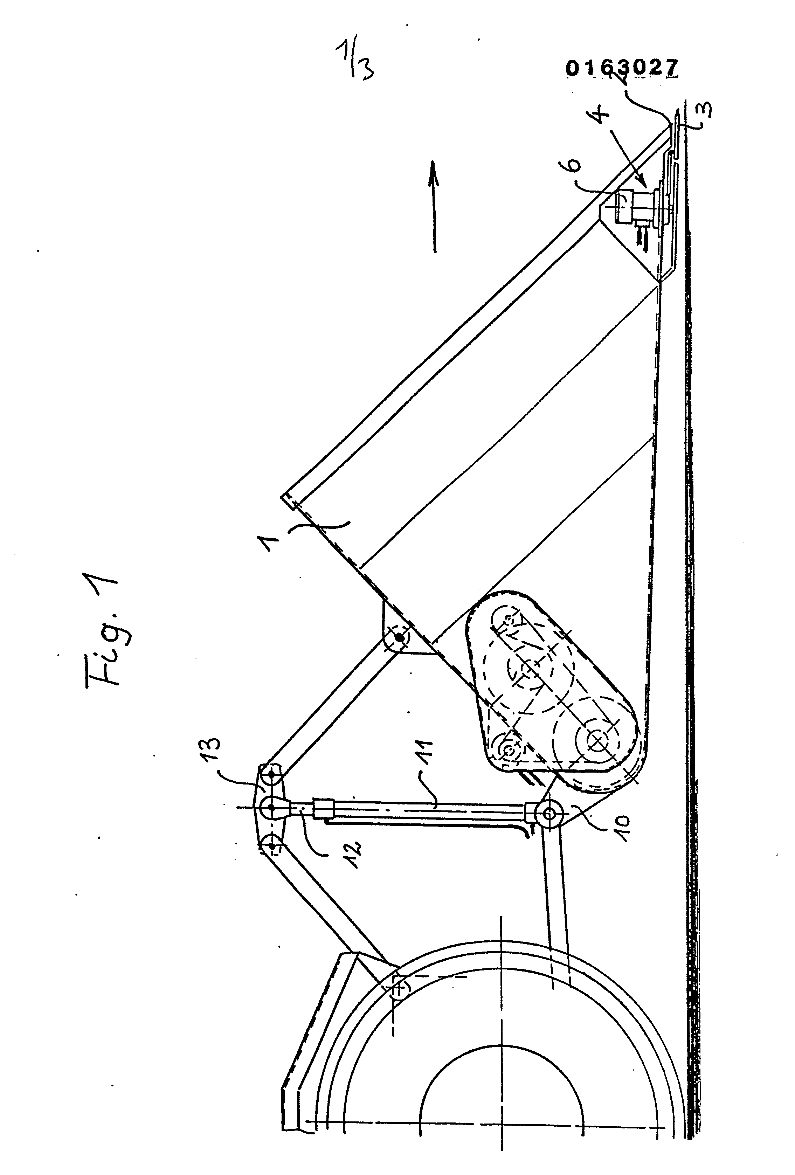

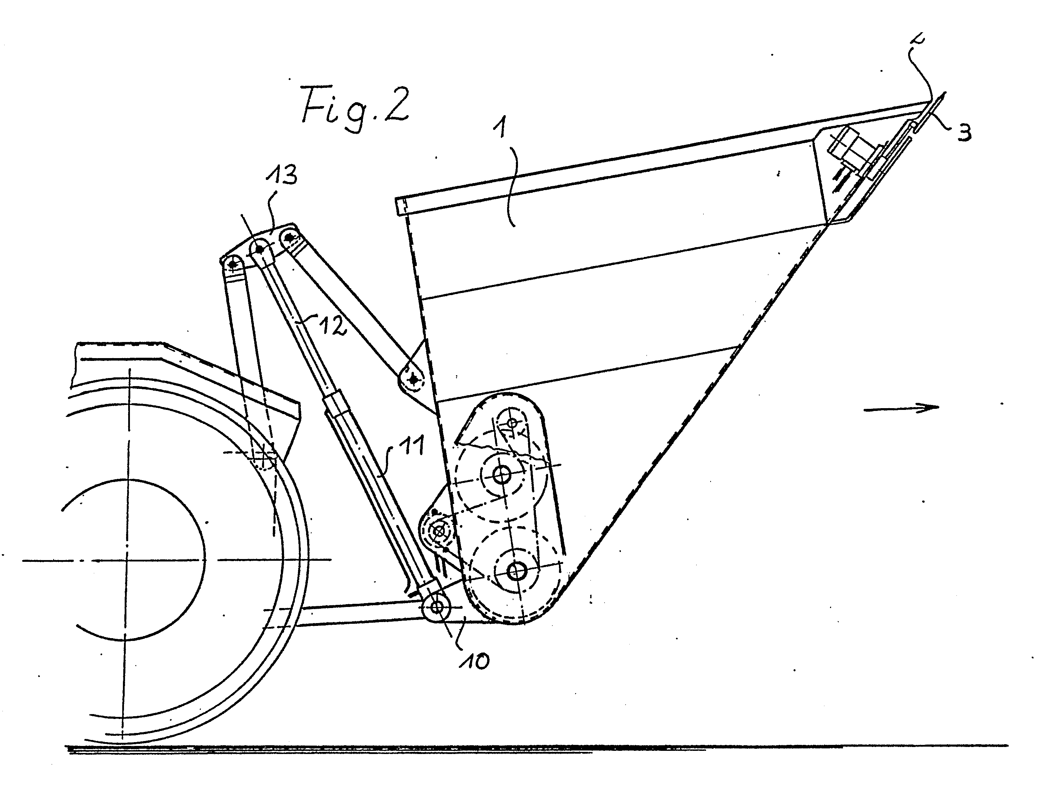

In den Figuren 1 und 2 ist ein erfindungsgemäßes Aufnahmegerät, mit dem aufgenommenes Silagegut noch gemischt und zerkleinert werden kann, mit einem Aufnahmebehälter 1 in der Lade- bzw. Mischstellung dargestellt.
Der Aufnahmebehälter 1 besteht aus einem bis auf die
Oberseite allseitig geschlossenen Gehäuse. Von den
Öffnungsrändern des Behälters bildet der in Fahrtrichtung (in den Figuren durch einen Pfeil angedeutet) vordere Behälterrand eine Ladekante 2. Parallel zu der
Ladekante 2 sind unterhalb der Kante Schneidblätter 3
einer Schneidvorrichtung 4 angeordnet, die mit ihrer
Schneidseite über die Ladekante 2 hinaus vorstehen.

Die genaue Anordnung der Schneidblätter 3 ist aus Figur
3 ersichtlich. Hier liegen zwei gleichgroße Schneidblätter 3 nebeneinander, so daß sie nahezu die gesamte Breite der Ladekante 2 einnehmen. Zwischen den Schneidblättern 3 und seitlich zu den Behälterseitenwänden ist genügend Abstand gehalten, daß die Schneidblätter 3 eine ungehinderte Schneidbewegung durchführen können.

Um eine Schneidbewegung zu ermöglichen, bei der die Schneidblätter 3 in Ladekantenrichtung sich sozillierend und gegensinnig bewegen, ist jedes der Blätter 3 gelenkig mit einem Gestänge 5 eines Schwingantriebes 6 verbunden, an dem das Gestänge 5 angelenkt ist. Der Schwingantrieb 6 kann beispielsweise aus einem Elektromotor und einem Getriebe mit Exzenterscheibe bestehen. Schwingantrieb 6 und Gestänge 5 sind in der Behälterwandung verdeckt angeordnet, so daß die Aufnahme des Silagegutes durch diese Teile nicht behindert wird.

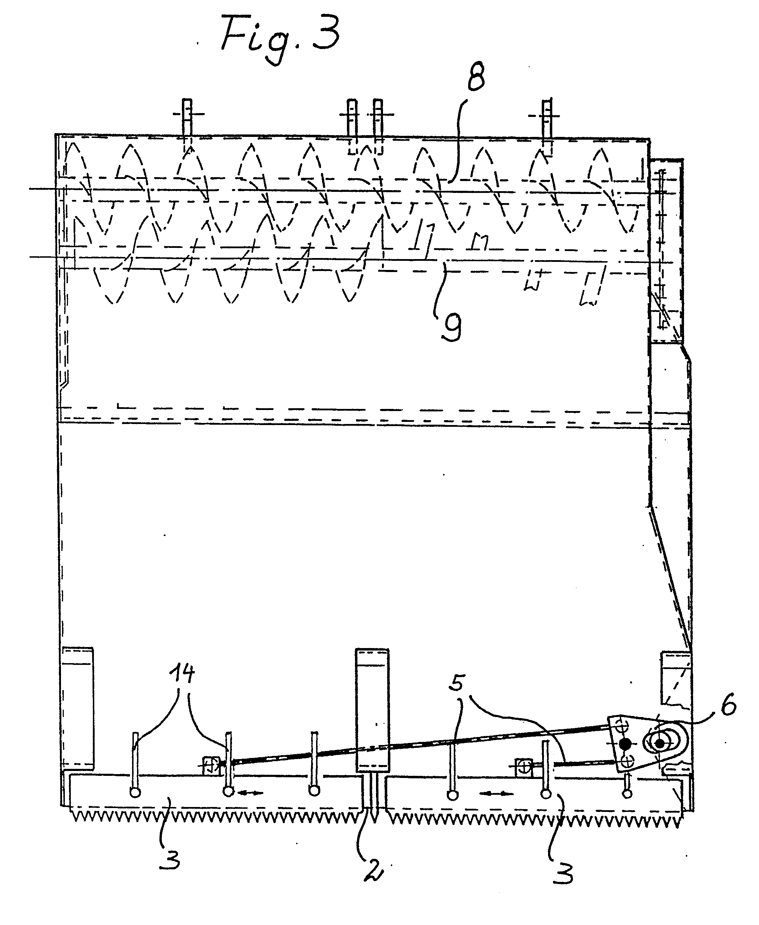

Vorzugsweise sind auch die Schneiblätter 3, wie in Figur 3 angedeutet ist, in einer zur Ladekante 2 hin offenen Tasche der Behälterwandung geschützt angeordnet, aus der nur die mit Schneidzähnen versehenen Schneidkanten der Schneidblätter 3 hervorragen. Mit diesen Schneidkanten können sich die Schneidblätter 3 auch in einem sehr harten Silagegut leicht vorarbeiten.

In dem gerundeten Bodenteil 7 des Aufnahmebehälters 1 ist weiterhin eine Schnecke 8 und oberhalb der Schnecke 8 eine Kratzwelle 9 angeordnet, durch die das von dem Behälter aufgenommene Silagegut zerkleinert und intensiv durchmischt wird. Schnecke 8 und Kratzwelle 9 werden durch seitlich außerhalb des Aufnahmebehälters 1 angeordnete Getriebeelemente mit Antriebsrädern und Antriebskette so angetrieben, daß sie gegenläufig um ihre waagerechten Achsen rotieren.

Der Aufnahmebehälter 1 ist gemäß den Figuren 1 und 2 über eine Halterung 10 an der Unterseite seines Bodens schwenkbar an einem Fahrzeug befestigt. Mit der Halterung 10 ist gleichzeitig der Fußpunkt des Zylinders 11 einer hydraulisch betätigbaren Kolben-Zylinder-Anordnung gelenkig verbunden. Die Kolbenstange 12 der Kolben-Zylinder-Anordnung endet in einem Kniehebel 13, dessen Hebelarme mit an der Behälterrückwandung bzw. an dem Fahrzeug angeordneten Fixpunkten drehbeweglich verbunden sind. Es ist darauf hinzuweisen, daß über die Breite des Aufnahmebehälters wenigstens zwei derartiger Kolben-Zylinder-Anordnungen vorgesehen sind.

Wie aus den Figuren ersichtlich ist, kann mit Hilfe der Kolben-Zylinder-Anordnung der Aufnahmebehälter 1 in seiner Aufnahmestellung verschwenkt werden, in der die vordere Behälterwand eine zum Boden parallele Lage einnimmt und aus dieser Stellung nach Aufnahme des Silagegutes wieder in die Mischstellung hochgeschwenkt werden. Zur besseren Zerkleinerung des Silagegutes kann der Außenumfang der Schnecke 8 gezahnt sein.

Um das Silagegut beim Aufnehmen gleich aufzulockern, weisen gemäß Figur 3 die längs der Ladekante 2 angeordneten Schneidblätter 3 auf ihrer Oberseite Stegführungen 14 auf. Im Ausführungsbeispiel bestehen die Stegführungen 14 aus hochkant gestellten Flacheisen, die an ihren vorderen Enden mit den Schneidblättern 3 verbunden sind. Bei Betätigung des Schwingantriebes 6 werden also die Flacheisen zusammen mit den Schneidblättern 3 bewegt. Vorzugsweise sind mehrere Stegführungen 14 über die Breite der Blätter verteilt an jedem der Schneidblätter 3 vorgesehen.

Patentansprüche:

1. Gerät zur Aufnahme insbesondere von Silagegut, mit einem nach oben offenen Aufnahmebehälter, der an einem Fahrzeug anbringbar und aus einer Ladestellung in eine weitere Arbeitsstellung verschwenkbar ist, dadurch gekennzeichnet, daß zumindest die vordere Ladekante (2) der Öffnungsränder des Aufnahmebehälters (1) eine Schneid- oder Sägevorrichtung (4) mit einem oder mehreren Schneidblättern (3) aufweist, und daß die parallel zur Ladekante verlaufenden Schneidblätter (3) mit ihrer Schneidseite vor der Ladekante (2) liegen.

2. Gerät nach Anspruch 1, mit einem Mischwerk für das aufgenommene Silagegut, dadurch gekennzeichnet, daß in dem Behälter (1) ein um eine waagerechte Welle rotierendes Mischwerk angeordnet ist.

3. Gerät nach Anspruch 1 oder 2, dadurch gekennzeichnet, daß die Schneidvorrichtung (4) zwei nahezu über die Breite der Ladekante (2) sich erstreckende Schneidblätter (3) und einen Schwingantrieb (6) aufweist, über den die Blätter (3) in Ladekantenrichtung oszillierend und gegensinnig bewegbar sind.

4. Gerät nach den Ansprüchen 1 bis 3, dadurch gekennzeichnet, daß die seitlichen Öffnungsränder des Behälters Schneidblätter (3) aufweisen.

5. Gerät nach den Ansprüchen 1 bis 4, dadurch gekennzeichnet, daß die Schneidvorrichtung (4) parallele, aneinander anliegende und gegensinnig arbeitende Schneidblätter aufweist.

6. Gerät nach den Ansprüchen 1 bis 5, dadurch gekennzeichnet, daß die Schneidvorrichtung (4) ein endloses Schneidband aufweist, das entlang der Ladekante (2) und den Seitenrändern des Behälters verläuft.

7. Gerät nach den Ansprüchen 1 bis 6, dadurch gekennzeichnet, daß die Schneidblätter oder das Schneidband in einer zu den Kanten hin offenen Tasche der Behälterwandung angeordnet sind.

8. Gerät nach den Ansprüchen 1 bis 7, dadurch gekennzeichnet, daß das Mischwerk des Behälters eine im unteren Bereich des Behälters liegende Schnecke (8) und eine darüber angeordnete, sich gegenläufig zur Schnecke (8) drehende Kratzwelle (9) aufweist.

9. Gerät nach den Ansprüchen 1 bis 8, dadurch gekennzeichnet, daß der Außenumfang der Schnecke (8) gezahnt ist.

10. Gerät nach den Ansprüchen 1 bis 9, dadurch gekennzeichnet, daß die längs der Ladekante (2) angeordneten Schneidblätter (3) auf ihrer Oberseite Stegführungen (14) zur Auflockerung des Silagegutes aufweisen.

Fig. 1

Fig.2

0163027

Fig.3

Europäisches
Patentamt

EUROPÄISCHER RECHERCHENBERICHT

0163027

Nummer der Anmeldung

EP 85 10 3057

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 935 870  (FÖCKERSPERGER) * Ansprüche 1,2,6-8; Seite 8, Zeile 24 - Seite 9, Zeile 5; Abbildungen 1-3 * | 1,3 | A 01 F  25/20 |
| A | | 5,6 | |
| Y | * Anspruch 1 * | 2 | |
| | --- | | |
| Y | DE-A-3 007 490  (HOOPMAN) * Ansprüche 1,4,7; Abbildungen 2,4,5 * | 2 | |
| A | | 8,9 | |
| | --- | | RECHERCHIERTE SACHGEBIETE (Int. Cl.4) |
| X | FR-A-2 148 060  (SCHAFFER) * Ansprüche 1,2; Abbiildung 1 * | 1,3-5 | A 01 F |
| | --- | | |
| X | FR-A-2 312 943  (TENHUNEN) * Ansprüche 1,3,4,7,13; Abbildung 1 * | 1,4 | |
| | --- | | |
| A | EP-A-0 090 906  (PRIPAROP) * Abbildung 10; Ansprüche 21,22 * | 1,4 | |
| | --- | | |
| A | DE-A-2 750 525  (TEBBE) | 2,8,9 | |
| | ---          -/- | | |

Der vorliegende Recherchenbericht wurde für alle Patentansprüche erstellt.

| Recherchenort DEN HAAG | Abschlußdatum der Recherche 20-06-1985 | Prüfer MEINDERS H. |
|---|---|---|

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 399 373 (EMILY S.A.)<br><br>----- | 2 | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 20-06-1985 | MEINDERS H. |